# FASCICULE DE BREVET EUROPEEN

(11) **EP 1 616 731 B1**
(45) Date de publication et mention de la délivrance du brevet: **30.09.2009**
(21) Numéro de dépôt: 05014855.0
(22) Date de dépôt: 08.07.2005
(51) Int. Cl.: B60G 21/045, B60G 3/01

(54) **Véhicule comportant une liaison au sol assurant la suspension individuelle des roues, ainsi qu'un contrôle actif de la hauteur de caisse**
Fahrzeug mit Verbindung zum Boden zur unabhängigen Radaufhängung und zur aktiven Regelung des Fahrzeugaufbauniveaus
Vehicle with link to the ground enabling independent wheel suspension and active control of the chassis height

(30) Priorité: 15.07.2004 FR 0407897
(43) Date de publication de la demande: 18.01.2006
(73) Titulaire: Michelin Recherche et Technique S.A., 1763 Granges-Paccot (CH)
(72) Inventeur: Laurent, Daniel, 1723 Marly (CH); Walser, Daniel, 1700 Fribourg (CH)
(74) Mandataire: Lasson, Cédric Y. M.

(56) Documents cités:
- EP-A- 0 878 332
- EP-A1- 0 878 378
- WO-A1-96/08959
- FR-A1- 2 582 997
- FR-A1- 2 700 501
- FR-A5- 2 053 817
- US-A- 4 168 082
- US-A- 5 547 207
- US-A- 5 580 089

## Description

La présente invention concerne la liaison au sol de véhicules, notamment de véhicules routiers. Elle concerne tant le guidage des roues par rapport à la caisse de ce véhicule, que le contrôle de l'assiette de la caisse du véhicule, en particulier le contrôle de sa hauteur et de son roulis.

Le guidage de la roue a pour but d'assurer une position rigoureusement maîtrisée du plan de la roue par rapport au châssis ou à la caisse d'un véhicule au cours des mouvements de débattement de la suspension. En général, on identifie facilement sur un véhicule un plan de symétrie. Pour la suite, convenons que ce plan longitudinal et vertical constitue un repère lié au châssis. Rappelons que l'on appelle « plan de roue » le plan perpendiculaire à l'axe de rotation de la roue, passant par le centre de l'aire de contact avec le sol d'un pneu ou bandage élastique monté sur ladite roue. Il est courant de désigner par " suspension verticale " le débattement de la roue verticalement par rapport au châssis. On appelle " carrossage " ou "angle de carrossage" l'angle que forme le plan de roue par rapport à une droite perpendiculaire au sol. On appelle " braquage " la rotation du plan de roue autour d'une droite perpendiculaire au sol élevée au centre de l'aire de contact du pneu sur le sol. Enfin, on appelle " roulis " ou "roulis de caisse" l'inclinaison de la caisse du véhicule autour d'un axe longitudinal.

Le guidage du plan de roue induit directement l'attitude du pneu au sol, donc les sollicitations que subit ledit pneu et la position plus ou moins favorable dans laquelle il se trouve pour transmettre des efforts, notamment des efforts transversaux. Or on sait que ces efforts sont de première importance pour le comportement du véhicule, donc pour la sécurité.

On sait que les véhicules routiers en usage de nos jours subissent dans un virage un mouvement de roulis en raison même de leur suspension. La force centrifuge provoque en effet un transfert de charge vers l'extérieur du virage, ce qui a pour conséquence un surcroît de compression des suspensions du côté extérieur au virage, et une détente des suspensions du côté intérieur au virage, d'où le roulis. Or ce roulis est préjudiciable au confort des passagers mais aussi à la tenue de route du véhicule en particulier du fait de la variation de carrossage des roues qu'il provoque. Le moyen le plus couramment employé pour atténuer ce roulis consiste à utiliser une ou plusieurs barres dites "antiroulis".

Malheureusement, une barre antiroulis ne peut que limiter le roulis, en opposant à celui-ci un couple de réaction. Par principe, elle ne peut que limiter la prise de roulis, donc elle ne peut pas empêcher totalement les variations de carrossage des roues dans un sens défavorable au bon fonctionnement des pneus. De plus, même si le roulis est réduit, le transfert de charge a bien lieu et cette répartition inégale de la charge sur les pneumatiques a tendance à réduire le potentiel d'adhérence global du véhicule.

FR-A-2 700 501 est considéré comme étant l'état de la technique le plus proche de l'objet de l'invention et divulgue toutes les caractéristiques du préambule de la revendication indépendante 1.

Par la demande de brevet EP 0878378, on connaît une proposition qui décrit un véhicule comportant un mécanisme de contrôle du carrossage qui, vu dans un plan vertical perpendiculaire à l'axe longitudinal du véhicule, forme un parallélogramme déformable. Ce véhicule utilise un système de suspension verticale à glissière située dans la roue. L'habitacle de ce véhicule peut en outre s'incliner par rapport au châssis pour que les passagers ressentent moins les efforts transversaux dus à la force centrifuge. L'ensemble permet de contrôler l'orientation du plan de roue et de la caisse de façon rigoureuse. Cette disposition est toutefois assez encombrante.

Un objectif de la présente invention est de permettre le contrôle actif de la hauteur de caisse et/ou du roulis tout en autorisant les mêmes degrés de libertés de mouvement du plan de roue par rapport au sol et le même contrôle rigoureux du plan de roue. Le contrôle de la hauteur de caisse peut permettre de faire varier l'altitude du véhicule par rapport au sol en fonction par exemple de sa vitesse ou de la nature du terrain. Le contrôle actif du roulis peut par exemple permettre de provoquer un contre-roulis (une inclinaison de la caisse vers l'intérieur du virage), c'est à dire un roulis de caisse dans le sens inverse de celui que l'on observe sur un véhicule conventionnel.

Un autre objectif de la présente invention est de parvenir à une disposition plus compacte permettant par exemple de laisser plus de volume disponible entre les trains roulants, notamment pour loger la mécanique et/ou l'habitacle.

L'invention propose un véhicule comportant :
- une caisse suspendue,
- au moins deux roues montées chacune sur un porte-roue, chaque porte-roue étant monté sur un dispositif de suspension comportant un support de suspension et des moyens de guidage du porte-roue par rapport au support de suspension, le dispositif de suspension autorisant un débattement du porte-roue par rapport au support de suspension, la course du débattement étant suffisante pour procurer le mouvement de suspension verticale requis,
- au moins une roue étant disposée d'un côté de la caisse, transversalement, au moins une autre roue étant disposée de l'autre côté de la caisse,
dans lequel
- chaque support de suspension est lié à la caisse par un mécanisme de variation de hauteur permettant de faire varier la hauteur relative du support de suspension par rapport à la caisse,
- chaque mécanisme de variation de hauteur est actionné par un moyen de commande de hauteur,
- le véhicule comprend des moyens de pilotage centralisé des moyens de commande de hauteur,
- l'action des moyens de commande de hauteur d'un même côté de la caisse est coordonnée afin de faire varier simultanément, d'un même côté de la caisse, la hauteur relative de chaque support de suspension.
- le mécanisme de variation de hauteur comporte, pour chaque roue, un dispositif formant un parallélogramme déformable, ledit parallélogramme recevant d'un côté le support de suspension et étant solidaire du côté opposé de la caisse du véhicule, les moyens de commande de hauteur permettant de déformer ledit parallélogramme

De préférence, si le véhicule comprend au moins 3 roues, au moins une roue centrale étant disposée dans un plan de symétrie du véhicule, l'action des moyens de commande des roues est coordonnée afin de maintenir l'assiette longitudinale de la caisse au cours des variations de hauteur relative de chaque support de suspension.

De préférence cependant, le véhicule comprend au moins quatre roues, au moins deux roues étant disposées d'un côté de la caisse, transversalement, au moins deux autres roues étant disposées de l'autre côté de la caisse. De préférence, pour un tel véhicule les moyens de commande de hauteur d'un même côté de la caisse comprennent un actionneur unique.

De préférence, les parallélogrammes s'étendent dans un plan sensiblement parallèle au plan médian du véhicule.

De préférence, le véhicule comportant quatre roues, un essieu avant et un essieu arrière, chaque parallélogramme de chaque roue ayant une partie avant et une partie arrière, les parallélogrammes des roues de l'essieu avant sont articulés à la caisse par leur partie arrière et les parallélogrammes des roues de l'essieu arrière sont articulés à la caisse par leur partie avant.

De préférence, les parallélogrammes des roues d'un même côté du véhicule sont liés mécaniquement entre eux et soumis à un actionneur commun. De préférence encore, les mécanismes de variation de hauteur imposent à chacun des supports de suspension situé d'un même côté du véhicule des valeurs de changement de hauteur sensiblement identiques. De préférence, les moyens de pilotage centralisé permettent des variations de hauteur d'un côté de la caisse différentes des variations de hauteur de l'autre côté de la caisse. De préférence, les moyens de pilotage centralisé permettent en outre des variations de hauteur identiques des deux côtés de la caisse.

De préférence, le véhicule comprend au moins un frein de hauteur permettant un blocage des moyens de commande de hauteur, ledit frein étant piloté par les moyens de pilotage centralisé de façon à libérer les moyens de commande lors des variations de hauteur.

De préférence, le débattement du dispositif de suspension a lieu sensiblement dans le plan de la roue. De préférence encore, le dispositif de suspension comporte un barreau orienté sensiblement verticalement, un fourreau de guidage en translation du barreau, le fourreau étant monté sur le support sans mouvement relatif possible dans le sens vertical entre le fourreau et le support, le porte-roue étant monté en enfourchement aux deux extrémités du barreau. De préférence encore, le fourreau est monté sur le support par l'intermédiaire d'un pivot autorisant le braquage de la roue par rapport au support.

L'invention sera mieux comprise par la description qui va suivre des figures, concernant un véhicule à quatre roues. Cet exemple est donné à titre non limitatif, l'invention s'appliquant en effet plus généralement aux véhicules comportant au moins deux disposées transversalement de part et d'autre du véhicule. Parmi les figures annexées,
- la figure 1 est une vue en perspective d'une liaison au sol du véhicule selon l'invention ;
- la figure 2 est une vue partielle en projection selon l'axe de la roue de la liaison au sol de la figure 1 ;
- la figure 3 est une vue partielle en projection verticale de la liaison au sol de la figure 1;
- les figures 4 et 5 sont des vues similaires à la figure 2 pour deux positions différentes d'un mécanisme de variation de hauteur selon l'invention ;
- la figure 6 montre un mode de réalisation de moyens de commande de hauteur selon l'invention ;
- les figures 7 à 9 sont des vues de face d'un véhicule selon l'invention roulant en ligne droite ;
- la figure 10 est une vue de face du véhicule de la figure 7 lorsqu'il parcourt une courbe à droite .

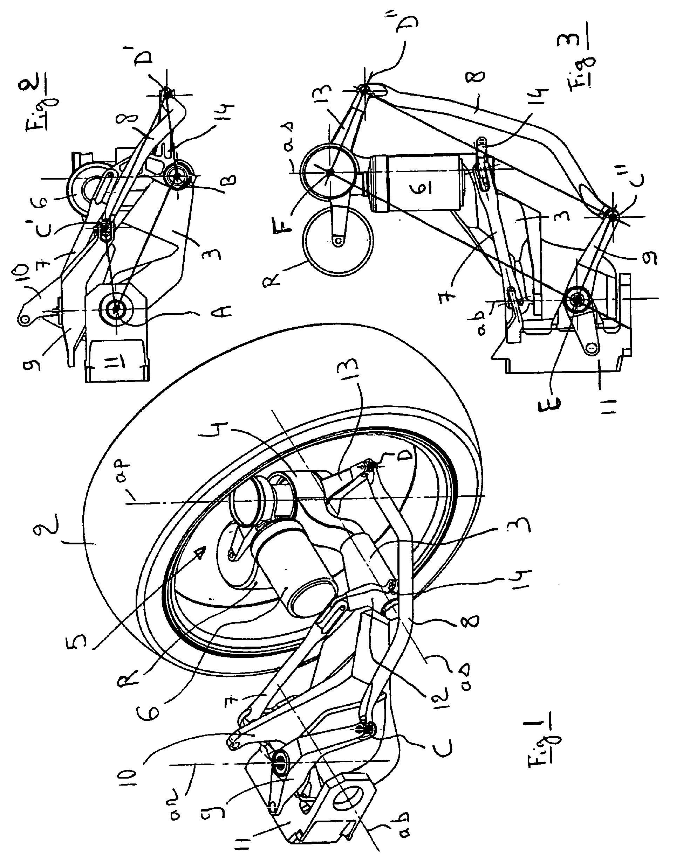

Les figures 1, 2 et 3 montrent en détail un mode de réalisation de la liaison au sol d'un véhicule selon l'invention. Il s'agit ici des éléments de guidage de la roue avant gauche. La roue n'est pas représentée sur les figures 2 et 3.

Sur ces figures, une roue 2 est liée à un support 4 par l'intermédiaire d'un dispositif de suspension verticale 5. Le support 4 est lié à la caisse du véhicule par l'intermédiaire d'un bras de variation de hauteur 3. Le bras 3 peut osciller par rapport à son ancrage 11 sur la caisse autour d'un axe de bras (ab) horizontal et transversal. Le support 4 peut à son tour osciller par rapport au bras 3 autour d'un axe de support (as) également horizontal et transversal. On comprend donc que les mouvements d'oscillation du bras permettent de faire varier la hauteur de caisse indépendamment des mouvements du dispositif de suspension verticale 5. Ceci illustre un principe de l'invention selon lequel on superpose les effets d'une commande de hauteur à ceux d'une suspension verticale. La commande de hauteur concerne des variations peu rapides mais durables. Cette commande est de préférence organisée de façon à avoir une consommation énergétique réduite. La suspension permet quant à elle des mouvements rapides et fréquents.

La roue 2 peut braquer autour d'un axe de pivot (ap). Ce braquage est contrôlé par une bielle de direction 8 agissant sur un levier de direction 13. La bielle de direction est commandée par un renvoi de direction 9 monté à pivotement autour d'un axe de renvoi (ar) vertical sur l'ancrage (11) du bras de variation de hauteur. Le renvoi est quant à lui actionné par un système de direction (non représenté).

Le bras de variation de hauteur 3 est commandé par un vérin (non représenté ici) lié d'une part à la caisse et d'autre part à une corne 10 dudit bras.

Dans ce mode de réalisation préféré, le dispositif de suspension verticale est un système à glissière verticale tel que celui décrit dans la demande de brevet EP 0878332. Ce système de suspension active utilise un moteur électrique de suspension 6 qui agit en parallèle avec un ressort métallique de suspension (R). Ce système permet de contrôler électriquement la suspension verticale. On peut en particulier faire varier la raideur apparente de la suspension verticale, par exemple pour maintenir une position centrée sur la course disponible lors des variations de charge. Lorsque l'on parle de variations de charge, on pense en particulier aux variations dynamiques dues au transfert de charge dans un virage ou un dévers et aux variations statiques dues au chargement variable du véhicule. Un tel système de suspension active peut donc, à lui seul, permettre de réduire, de compenser ou même de surcompenser le roulis. De préférence cependant, dans le cadre de la présente invention, on choisit de compenser à 100 % les variations dynamiques de la charge vue par la suspension de chaque roue par l'intermédiaire de la suspension verticale et d'imposer parallèlement un contre-roulis à la caisse par l'intermédiaire des mécanismes de variation de hauteur.

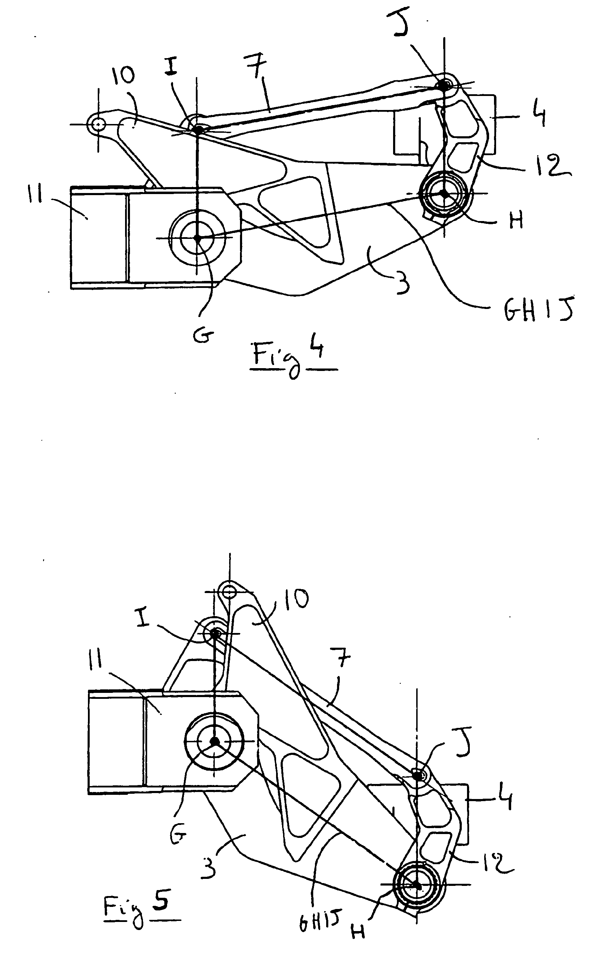

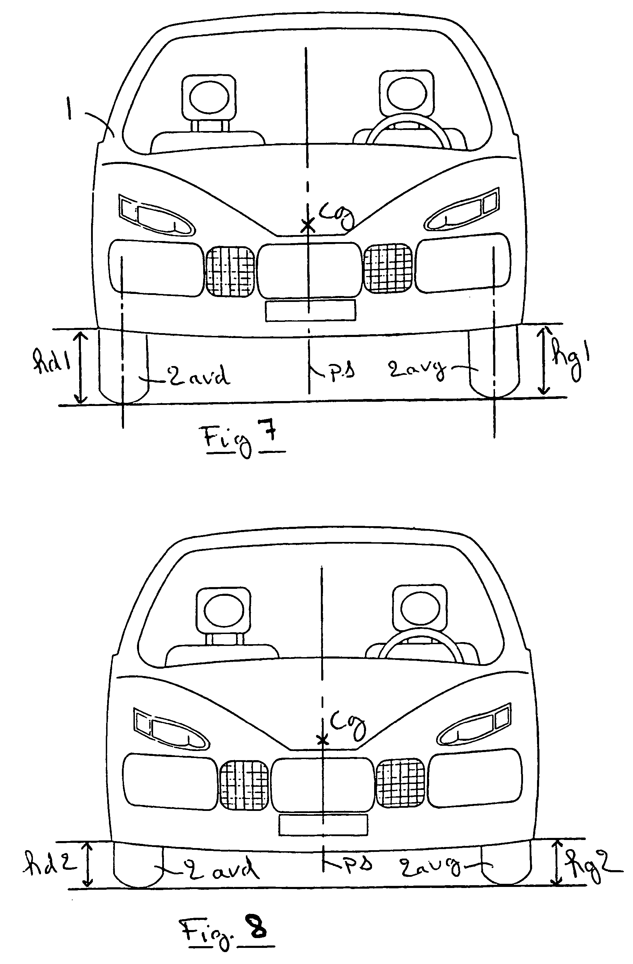

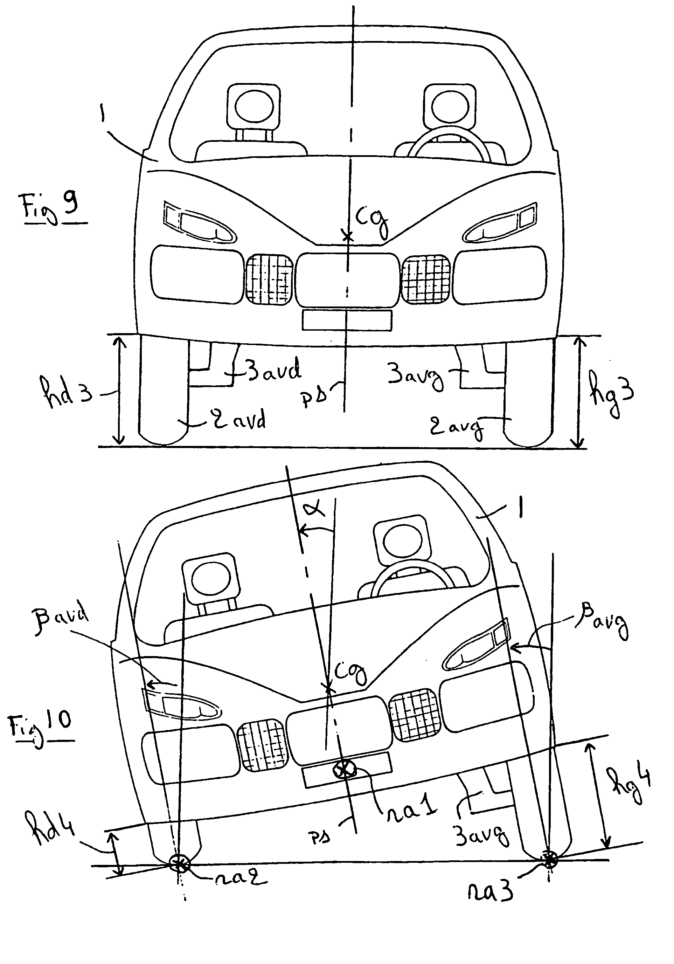

Les figures 4 et 5 montrent en projection dans un plan longitudinal vertical (par exemple le plan de symétrie "ps" du véhicule visible sur les figures 7 à 10) les éléments spécifiques et le fonctionnement du mécanisme de variation de hauteur. La figure 4 correspond par exemple à la position basse de la caisse, c'est à dire comme pour les deux roues visibles du véhicule de la figure 8 et pour la roue avant droite du véhicule de la figure 10. La figure 5 correspond à la position haute, c'est à dire comme pour les deux roues du véhicule sur la figure 9 ou la roue gauche du véhicule de la figure 10.

On voit sur ces figures 4 et 5 qu'une bielle de reprise 7 est liée d'une part à l'ancrage 11 sur la caisse et d'autre part au support 4 par l'intermédiaire d'un levier de reprise 12. Cette bielle contrôle l'orientation du support 4 par rapport à la caisse lors des oscillations du bras de variation de hauteur.

En référence à la figure 1, on désigne par la lettre C le centre de l'articulation de la bielle de direction 8 sur le renvoi de direction 9 et on désigne par la lettre D le centre de l'articulation de la bielle de direction 8 sur le levier de direction 13.

En référence à la figure 2 qui montre le système en vue plane sur un plan vertical longitudinal, on désigne par la lettre A la projection de l'axe de bras (ab) dans le plan vertical, on désigne par la lettre B la projection de l'axe de support (as) dans le plan vertical, on désigne par la lettre C' la projection dans le plan vertical du centre de l'articulation de la bielle de direction 8 sur le renvoi de direction 9 et on désigne par la lettre D' la projection dans le plan vertical du centre de l'articulation de la bielle de direction 8 sur le levier de direction 13.

En référence à la figure 3 qui montre le système en vue plane sur un plan horizontal, on désigne par la lettre C" la projection dans le plan horizontal du centre de l'articulation de la bielle de direction 8 sur le renvoi de direction 9, on désigne par la lettre D" la projection dans le plan horizontal du centre de l'articulation de la bielle de direction 8 sur le levier de direction 13, on désigne par la lettre E la projection de l'axe de renvoi (ar) dans le plan horizontal et on désigne par la lettre F la projection de l'axe de pivot (ap) dans le plan horizontal.

De préférence, les deux conditions géométriques suivantes sont respectées : d'une part, les projections A, B, C' et D' dans un plan vertical longitudinal (voir figure 2) doivent former un premier parallélogramme dans ledit plan vertical et d'autre part les projections C", D", E et F (voir figure 3) doivent former un second parallélogramme dans le plan horizontal. Ainsi, le braquage de la roue et les variations de hauteur restent parfaitement indépendants. En effet, lorsque la hauteur de caisse et le braquage de la roue varient, ces parallélogrammes se déforment. La déformation liée aux variations de hauteur concerne principalement le premier parallélogramme (ABC'D') visible à la figure 2. La déformation liée au braquage concerne principalement le second parallélogramme (C"D"EF) visible à la figure 3.

Dans la pratique, on peut naturellement s'accommoder de parallélogrammes imparfaits pourvu que les braquages induits par les variations de hauteur soient acceptables par exemple parce qu'il seraient limités en amplitude ou que ces mouvements induits seraient compensés par ailleurs (par l'intermédiaire de la commande de direction par exemple).

Sur cet exemple, les axes de support (as) et de pivot (ap) sont sécants. Ceci permet dans le cas représenté ici d'un axe de pivot vertical et passant par le centre de la roue de limiter les efforts vus en particulier par la bielle de reprise 7. La conséquence de cette configuration particulière et des conditions géométriques citées ci-dessus est que les axes de renvoi (ar) et de bras (ab) sont également sécants. Naturellement, cette configuration n'est pas essentielle. Au contraire, il peut être intéressant de décaler les dits axes, par exemple pour des questions d'encombrement.

Sur les figures 1, 2 et 3, on remarque une chape 14 sur le levier de reprise 12. Dans le cas d'une roue non directrice, cette chape peut recevoir l'extrémité d'une biellette de pince, l'autre extrémité de cette biellette étant alors liée au levier de direction 13 en lieu et place de la bielle de direction 8. Dans cette configuration, le braquage de la roue est alors fixe.

En référence aux figures 4 et 5, on désigne par la lettre I la projection dans le plan longitudinal vertical du centre de l'articulation de la bielle de reprise 7 sur l'ancrage 11, on désigne par la lettre J la projection du centre de l'articulation de la bielle de reprise 7 sur le levier de reprise 12, on désigne par la lettre G la projection de l'axe de bras (ab) et par la lettre H la projection de l'axe de support (as). Dans ce plan vertical, les points G, H, I et J constituent de préférence un parallélogramme afin que l'orientation du support 4 par rapport à la caisse ne varie pas en fonction de la hauteur de caisse. On visualise bien sur ces figures que les variations de hauteur sont directement obtenues par la déformation de ce parallélogramme GHIJ. On comprend également que lorsque le mécanisme de variation de hauteur est disposé de façon à osciller dans un plan vertical, c'est à dire que les axes de bras et de support sont tous deux horizontaux et transversaux, les variations de hauteurs peuvent avoir lieu pratiquement sans variation de voie et les variations de carrossage des roues sont alors sensiblement identiques aux variations de l'inclinaison du véhicule, c'est à dire à la différence de hauteur entre chaque côté du véhicule.

Dans la pratique, le mécanisme de variation de hauteur (3, 7, 11, 12) peut constituer un parallélogramme GHIJ imparfait pourvu que les mouvements induits par les variations de hauteur soient acceptables par exemple parce qu'il seraient limités en amplitude.

Dans le mode de réalisation décrit ici, le support 4 est orienté et demeure orienté de manière à ce que l'axe de pivot (ap) conserve un angle de chasse nul, c'est à dire qu'il soit et demeure vertical (si l'on considère le sol horizontal et que l'on fait abstraction des variations de carrossage). Si l'angle de chasse n'est pas nul, c'est à dire si l'axe de pivot présente une inclinaison par rapport à la verticale, cet angle de chasse peut selon l'invention être conservé au cours des variations de hauteur.

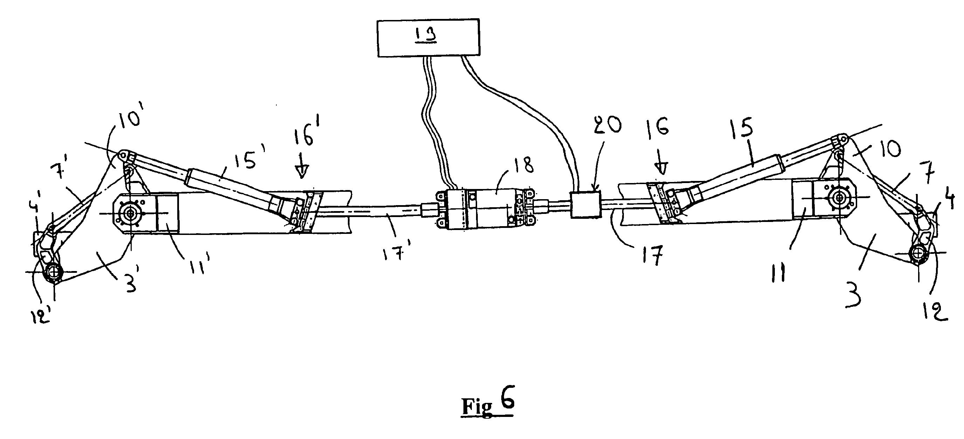

A la figure 6, on a représenté un mode de réalisation de l'ensemble des éléments permettant la variation de hauteur pour un côté d'un véhicule à quatre roues. Les roues ne sont pas représentées. Convenons que l'avant du véhicule se trouve à droite de la figure. Un mécanisme de variation de hauteur conforme à ce qui a été décrit plus haut est implanté à chaque extrémité. Chacun des mécanismes forme de préférence un parallélogramme. Le parallélogramme (3, 7, 11, 12) de l'essieu avant est articulé par sa partie arrière (11) à la caisse (1). Le parallélogramme de l'essieu arrière (3', 7', 11', 12') est articulé par sa partie avant (11') à la caisse. Chaque mécanisme est commandé par des moyens de commande de hauteur comprenant essentiellement un vérin (15, 15'), par exemple une vis à bille et un actionneur, par exemple un moteur électrique 18. Chaque vérin est articulé entre la caisse et la corne (10, 10') du bras de variation de hauteur respectif (3, 3'). Un arbre de transmission (17, 17') entraîne la vis à bille par l'intermédiaire d'un joint de cardan (16, 16'). Le moteur électrique 18 à double sortie est commun aux deux mécanismes de variation de hauteur de sorte qu'une liaison mécanique lie les mouvements de variation de hauteur des roues avant et arrière. Le moteur électrique est piloté par des moyens de pilotage centralisé (19) du véhicule.

De préférence, un frein de hauteur 20 est en outre prévu afin de permettre le blocage des moyens de commande lorsque aucune variation de hauteur n'a lieu. Ce frein peut être électrique et fonctionner de la manière suivante : un ressort agit en permanence pour serrer le frein et un électro-aimant contrôlé par les moyens de pilotage centralisé (19) agit contre ledit ressort pour desserrer le frein et libérer le fonctionnement des moyens de commande de hauteur. Ainsi, la consommation énergétique de l'ensemble est réduite au minimum car d'une part l'actionneur ne doit fournir aucun couple pour maintenir une position donnée et d'autre part la consommation d'énergie par le frein de hauteur est limitée à la durée des variations de hauteur. Cette disposition est également favorable sur le plan de la sécurité en cas de rupture d'alimentation électrique.

On comprend sur cette vue que des éléments tout à fait similaires peuvent être utilisés à l'avant et à l'arrière du véhicule. De préférence, leur implantation et leur fonctionnement sont symétriques, c'est à dire que les variations de hauteur sont identiques à l'avant et à l'arrière. Une conséquence intéressante du fait que les variations de hauteur sont identiques est que cela facilite la bonne répartition des efforts sur toutes les roues, que le véhicule comporte quatre roues ou plus.

Cette disposition permet en outre de faire varier l'empattement du véhicule en fonction de la hauteur de caisse. En effet, on voit bien ici que l'empattement tend à se réduire lorsque la hauteur augmente. Ceci favorise la maniabilité et les qualités de franchissement du véhicule. Un autre intérêt de cette configuration est un regroupement des masses au centre du véhicule.

Alternativement, on peut prévoir un actionneur indépendant par roue et commander en parallèle et à l'identique tous les actionneurs d'un même côté du véhicule.

De préférence, les moyens de pilotage centralisé permettent d'une part d'adapter automatiquement la hauteur globale du véhicule par exemple en fonction de sa vitesse ou de la nature du terrain et d'autre part son roulis par exemple à partir de mesures d'accélération transversale, de vitesse de lacet, d'angle au volant et de vitesse longitudinale. Par exemple, il peut être intéressant que le véhicule adopte une hauteur élevée lorsqu'il est à l'arrêt afin de faciliter l'embarquement ou le débarquement des passagers et que la hauteur diminue ensuite au fur et à mesure que le véhicule prend de la vitesse. De préférence, lesdits moyens de pilotage centralisé peuvent également tenir compte de choix opérés par le conducteur.

Aux figures 7, 8, 9 et 10, on a représenté en vue de face un exemple de véhicule selon l'invention dans des situations de roulage typiques.

Aux figures 7, 8, et 9, le véhicule roule en ligne droite sur un sol plan et horizontal. A la manière d'un véhicule conventionnel, le plan de symétrie (ps) de la caisse 1 est sensiblement vertical. Les roues avant (droite 2avd et gauche 2avg) sont également sensiblement verticales. Elles pourraient naturellement connaître un carrossage initial non nul comme ceci est tout à fait courant. Les autres roues ne sont pas visibles sur ces représentations.

Si l'on prend une référence fixe par rapport à la caisse, on peut définir une hauteur de caisse pour chaque côté du véhicule. A la figure 7, la hauteur droite (à gauche sur la figure) vaut "hd1" et la hauteur gauche vaut "hg1", hd1 étant sensiblement égal à hg1. Pour la commodité de la description, convenons d'appeler cette hauteur "position moyenne".

A la figure 8, altitude du véhicule est inférieure à celle de la figure 7. La hauteur droite "hd2" et la hauteur gauche "hg2" sont inférieures à hd1 et hg1. Convenons d'appeler cette hauteur "position basse".

A la figure 9, l'altitude du véhicule est supérieure à celle de la figure 7. La hauteur droite "hd3" et la hauteur gauche "hg3" sont nettement supérieures à hd1 et hg1. Convenons d'appeler cette hauteur "position haute".

Ces variations de hauteur de caisse peuvent être par exemple fonction de la vitesse de déplacement du véhicule et/ou du type de terrain sur lequel il roule ou tout simplement de choix opérés par le conducteur.

A la figure 10, le même véhicule parcourt un virage à droite, c'est à dire qu'en vue de face, il tourne vers la gauche de la figure. Dans cette situation, au contraire d'un véhicule conventionnel, la caisse 1 du véhicule selon l'invention peut être inclinée vers l'intérieur du virage (d'un angle α). De même, les roues sont également inclinées vers l'intérieur du virage (d'un angle βavd pour la roue avant droite et d'un angle βavg pour l'avant gauche). Les autres roues, qui ne sont pas visibles ici, adoptent des positions similaires. De préférence, les variations de carrossage sont sensiblement égales à la variation de roulis de caisse (si l'on fait abstraction des déformations élastiques).

En comparant la figure 10 aux figures 7, 8 et 9, on peut constater que la position de contre roulis représentée ici résulte principalement de la combinaison d'une position haute du côté extérieur au virage et d'un position basse du côté intérieur au virage.

Si l'on prend comme référence la position moyenne de la figure 7, le contre-roulis de la figure 10 résulte de la combinaison d'une augmentation de hauteur à droite et d'une diminution de hauteur à gauche. C'est à dire que l'inclinaison de la caisse correspond dans ce cas à une rotation autour d'un axe de roulis (ra1) situé à proximité du plan de symétrie (ps) du véhicule.

Si l'on prend comme référence la position basse de la figure 8, ce même contre-roulis résulte d'une augmentation de hauteur de caisse du côté extérieur au virage. La hauteur de caisse du côté intérieur au virage (à gauche sur la figure 10) n'a pratiquement pas varié. Dans ce cas, l'axe de roulis correspondant (ra2) passe par les centres des aires de contact des roues intérieures au virage (sur la gauche de la figure 10).

Enfin, si l'on prend comme référence la position haute de la figure 9, ce contre-roulis résulte alors d'une diminution de hauteur de caisse du côté gauche du véhicule. Dans ce cas, l'axe de roulis (ra3) passe par les centres des aires de contact des roues extérieures au virage (sur la droite de la figure 10).

En fait, selon en particulier la hauteur de départ du véhicule, on peut choisir de faire varier son inclinaison en agissant sur la hauteur d'un côté ou de l'autre ou des deux à la fois dans des proportions adéquates. Naturellement, la position de l'axe instantané de roulis (ra) dépend de ce choix. En toute rigueur, la définition d'un axe de roulis est une définition dynamique, c'est à dire que la position réelle ou théorique de cet axe varie bien sûr à chaque instant en fonction des variations de hauteurs de chaque roue du véhicule. Lors d'un virage, dans la mesure nécessaire en fonction de l'accélération transversale, on réduit de préférence d'abord la hauteur du côté intérieur et on augmente ensuite la hauteur du côté extérieur.

On comprendra que les exemples cités plus haut sont schématiques et avant tout destinés à illustrer l'invention.

La figure 10 illustre également une caractéristique avantageuse du véhicule selon l'invention selon laquelle son centre de gravité (cg) se trouve déplacé vers les roues intérieures au virage.

On aperçoit également sur les figures 9 et 10 les bras de variation de hauteur avant gauche (3avg) et avant droit (3avd) par l'intermédiaire desquels les transitions entre les configurations des différentes figures sont provoquées.

La référence à des positions moyenne, basse et haute n'est fait qu'à titre d'illustration. Naturellement, les hauteurs de caisse peuvent prendre une infinité de valeurs entre une hauteur minimale et une hauteur maximale.

Comme on l'a vu, l'invention peut s'appliquer à un véhicule comportant seulement deux roues disposées transversalement. Dans ce cas, on peut selon l'invention faire varier la hauteur, l'inclinaison de la caisse et de préférence en outre le carrossage des roues en agissant sur la commande de hauteur de l'une ou l'autre roue ou des deux simultanément comme décrit dans les figures pour un véhicule à quatre roues.

L'invention peut également s'appliquer à un véhicule comportant un nombre de roues pair et supérieur à quatre, par exemple six, huit, dix ou douze roues réparties de part et d'autre transversalement de la caisse. Dans ce cas, on peut selon invention faire varier la hauteur, l'inclinaison de la caisse et de préférence en outre le carrossage des roues en agissant sur la commande de hauteur de chacune des roues d'un côté ou l'autre côté ou des deux simultanément comme décrit dans les figures pour un véhicule à quatre roues.

L'invention peut également s'appliquer à un véhicule comportant un nombre pair ou impair de roues parmi lesquelles au moins une roue est disposée dans le plan de symétrie du véhicule. C'est le cas par exemple d'un véhicule à trois roues disposées en triangle mais également d'un véhicule à quatre roues disposées en losange. Dans ce cas, on peut selon l'invention faire varier la hauteur, l'inclinaison de la caisse et de préférence en outre le carrossage des roues en agissant sur la commande de hauteur de chacune des roues d'un côté ou de l'autre côté ou des deux simultanément comme décrit dans les figures pour un véhicule à quatre roues. La hauteur de la roue ou des roues centrale(s) peut alors de préférence être contrôlée de manière à maintenir l'assiette longitudinale du véhicule. La hauteur des roues centrales peut aussi rester fixe en particulier dans le cas d'un véhicule à trois roues disposées en triangle.

Le véhicule représenté sur les figures comporte une caisse (1) rigide, qui est soit directement porteuse des ancrages (11) soit solidaire d'un châssis lui-même porteur desdits ancrages. En tout état de cause, l'invention permet de contrôler le roulis de la caisse (et donc de l'habitacle) sans avoir recours à une articulation spécifique de la caisse ou de l'habitacle par rapport à la liaison au sol comme cela est nécessaire sur le véhicule décrit dans la demande EP 0 878 378.

Les figures représentent un mode de réalisation préféré de l'invention. Cependant de nombreuses variantes sont imaginables. Par exemple, bien que les mécanismes de variations de hauteur agissent de préférence dans un plan longitudinal du véhicule, l'homme du métier comprend qu'une orientation différente est possible si l'on en accepte les conséquences comme la variation de voie et l'encombrement mécanique. Autre exemple, le parallélisme rigoureux de l'axe de bras (ab) et de l'axe de support (as) n'est pas forcément indispensable. En fonction de ces choix, on pourra définir des tolérances de fabrication et de montage plus ou moins larges.

L'expression " liaison au sol " désigne communément l'ensemble des éléments entre le sol et la caisse ou le châssis d'un véhicule. La liaison au sol du véhicule selon l'invention non seulement offre une suspension verticale, mais en outre elle autorise à tout moment une modification du carrossage de la roue sans pour autant réduire la course de la suspension verticale ni à la compression ni à la détente, et tout en maintenant la suspension verticale dans des conditions optimales de fonctionnement, notamment parce que le pilotage de l'angle de carrossage permet de diminuer les moments et efforts tranchants apparaissant dans le guidage de la suspension verticale. Bien entendu, on ne peut pas agir directement sur le carrossage d'une roue par rapport au sol ; on le fait indirectement via les variations de hauteur du véhicule.

L'invention s'applique de préférence aux véhicules de tourisme (« passenger cars ») mais peut être mise en oeuvre sur tous types de véhicules.

## Revendications

1. Véhicule comportant :
• une caisse (1) suspendue,
• au moins deux roues (2) montées chacune sur un porte-roue, chaque porte-roue étant monté sur un dispositif de suspension (5) comportant un support de suspension (4) et des moyens de guidage du porte-roue par rapport au support de suspension (4), le dispositif de suspension autorisant un débattement du porte-roue par rapport au support de suspension (4), la course du débattement étant suffisante pour procurer le mouvement de suspension verticale requis,
• au moins une roue (2) étant disposée d'un côté de la caisse, transversalement, au moins une autre roue étant disposée de l'autre côté de la caisse,
dans lequel
• chaque support de suspension (4) est lié à la caisse par un mécanisme de variation de hauteur (3, 7, 11, 12) permettant de faire varier la hauteur relative du support de suspension (4) par rapport à la caisse (1),
• chaque mécanisme de variation de hauteur est actionné par un moyen de commande de hauteur (15, 16, 17, 18),
• le véhicule comprend des moyens de pilotage centralisé (19) des moyens de commande de hauteur, **caractérisé en ce que**
• l'action des moyens de commande de hauteur d'un même côté de la caisse est coordonnée afin de faire varier simultanément, d'un même côté de la caisse, la hauteur relative de chaque support de suspension (4)
• le mécanisme de variation de hauteur comporte, pour chaque roue, un dispositif formant un parallélogramme déformable (GHIJ), ledit parallélogramme recevant d'un côté le support de suspension (4) et étant solidaire du côté opposé de la caisse du véhicule, les moyens de commande de hauteur permettant de déformer ledit parallélogramme.

2. Véhicule selon la revendication 1 comprenant au moins trois roues (2), au moins une roue centrale étant disposée dans un plan de symétrie du véhicule dans lequel l'action des moyens de commande des roues est coordonnée afin de maintenir l'assiette longitudinale de la caisse au cours des variations de hauteur relative de chaque support de suspension (4).

3. Véhicule selon la revendication 1 comprenant au moins quatre roue (2), au moins deux roues étant disposées d'un côté de la caisse, transversalement, au moins deux autres roues étant disposées de l'autre côté de la caisse.

4. Véhicule selon la revendication 3 dans lequel les moyens de commande de hauteur d'un même côté de la caisse comprennent un actionneur unique (18).

5. Véhicule selon l'une des revendications précédentes dans lequel les parallélogrammes s'étendent dans un plan sensiblement parallèle au plan médian du véhicule.

6. Véhicule selon la revendication 5, comportant quatre roues, un essieu avant et un essieu arrière, chaque parallélogramme de chaque roue ayant une partie avant et une partie arrière, les parallélogrammes des roues de l'essieu avant étant articulés à la caisse par leur partie arrière et les parallélogrammes des roues de l'essieu arrière étant articulés à la caisse par leur partie avant.

7. Véhicule selon les revendications 3 et 5 dans lequel les parallélogrammes des roues d'un même côté du véhicule sont liés mécaniquement entre eux et soumis à un actionneur commun.

8. Véhicule selon l'une des revendications 3, 5 ou 7 dans lequel les mécanismes de variation de hauteur imposent à chacun des supports de suspension (4) situé d'un même côté du véhicule des valeurs de changement de hauteur sensiblement identiques.

9. Véhicule selon l'une des revendications précédentes dans lequel les moyens de pilotage centralisé permettent des variations de hauteur d'un côté de la caisse différentes des variations de hauteur de l'autre côté de la caisse.

10. Véhicule selon l'une des revendications précédentes, dans lequel les moyens de pilotage centralisé permettent des variations de hauteur identiques des deux côtés de la caisse.

11. Véhicule selon l'une des revendications précédentes comprenant au moins un frein de hauteur (20) permettant un blocage des moyens de commande de hauteur, ledit frein étant piloté par les moyens de pilotage centralisé (19) de façon à libérer les moyens de commande lors des variations de hauteur.

12. Véhicule selon l'une des revendications précédentes, dans lequel le débattement du dispositif de suspension a lieu sensiblement dans le plan de la roue.

13. Véhicule selon la revendication 12 dans lequel le dispositif de suspension (5) comporte un barreau orienté sensiblement verticalement, un fourreau de guidage en translation du barreau, le fourreau étant monté sur le support (4) sans mouvement relatif possible dans le sens vertical entre le fourreau et le support, le porte-roue étant monté en enfourchement aux deux extrémités du barreau.

14. Véhicule selon la revendication 13 dans lequel le fourreau est monté sur le support (4) par l'intermédiaire d'un pivot autorisant le braquage de la roue (2) par rapport au support (4).

## Claims

1. Vehicle having:
• a suspended body (1),
• at least two wheels (2) each mounted on a wheel support, each wheel support being mounted on a suspension device (5) comprising a suspension support (4) and means for guiding the wheel support relative to the suspension support (4), the suspension device allowing a vertical displacement of the wheel support relative to the suspension support (4), the size of the displacement being sufficient to produce the vertical suspension movement required,
• at least one wheel (2) arranged transversely on one side of the body and at least one other wheel arranged on the other side of the body,
in which
• each suspension support (4) is connected to the body by a height variation mechanism (3, 7, 11, 12) which allows the relative height of the suspension support (4) relative to the body (1) to be varied,
• each height variation mechanism is actuated by height control means (15, 16, 17, 18),
• the vehicle has centralised control means (19) for the height control means,
**characterised in that**
• the action of the height control means on each side of the body is co-ordinated so that on that side of the body, the relative height of each suspension support (4) is varied simultaneously,
• for each wheel, the height variation mechanism comprises a device that forms a deformable parallelogram (GHIJ), the said parallelogram receiving on one side the suspension support (4) and being permanently attached on the other side to the body of the vehicle, and the height control means enabling the said parallelogram to be deformed.

2. Vehicle according to Claim 1 comprising at least three wheels (2), with at least one central wheel arranged in a plane of symmetry of the vehicle in which the action of the wheel control means is coordinated so as to maintain the longitudinal level of the body during relative height variations of each suspension support (4).

3. Vehicle according to Claim 1 comprising at least four wheels (2), at least two of which are arranged transversely on one side of the body while at least two other wheels are arranged on the other side of the body.

4. Vehicle according to Claim 3, in which the height control means on the same side of the body comprise a single actuator (18).

5. Vehicle according to any of the preceding claims, in which the parallelograms extend in a plane essentially parallel to the median plane of the vehicle.

6. Vehicle according to Claim 5, comprising four wheels, a front axle and a rear axle, each parallelogram of each wheel having a front and a rear part, and the parallelograms of the front axle wheels being articulated to the body by their rear part while the parallelograms of the rear axle wheels are articulated to the body by their front part.

7. Vehicle according to Claims 3 and 5, in which the parallelograms of the wheels on the same side of the vehicle are mechanically interconnected and are controlled by a common actuator.

8. Vehicle according to either of Claims 3, 5 or 7, in which the height variation mechanisms impose on each of the suspension supports (4) on the same side of the vehicle height change values which are essentially identical.

9. Vehicle according to any of the preceding claims, in which the centralised control means enable height variations on one side of the body different from height variations on the other side of the body.

10. Vehicle according to any of the preceding claims, in which the centralised control means enable identical height variations on both sides of the body.

11. Vehicle according to any of the preceding claims, comprising at least one height brake (20) which enables the height control means to be blocked, the said brake being controlled by the centralised control means (19) in such manner as to free the height control means during height variations.

12. Vehicle according to any of the preceding claims, in which the vertical displacement of the suspension device takes place essentially in the wheel plane.

13. Vehicle according to Claim 12, in which the suspension device (5) comprises a bar orientated essentially vertically and a sleeve that guides the bar in translation, the sleeve being mounted on the support (4) with no possible relative movement in the vertical direction between the sleeve and the support, and the wheel support being mounted forked over the two ends of the bar.

14. Vehicle according to Claim 13, in which the sleeve is mounted on the suspension support (4) via a pivot which allows the wheel (2) to be steered relative to the support (4).

## Patentansprüche

1. Fahrzeug, das aufweist:
• eine aufgehängte Karosserie (1),
• mindestens zwei Räder (2), die je auf einen Radhalter montiert sind, wobei jeder Radhalter auf eine Aufhängungsvorrichtung (5) montiert ist, die einen Aufhängungsträger (4) und Führungseinrichtungen des Radhalters bezüglich des Aufhängungsträgers (4) aufweist, wobei die Aufhängungsvorrichtung eine Einfederung des Radhalters bezüglich des Aufhängungsträgers (4) erlaubt, wobei der Hub der Einfederung ausreichend ist, um die erforderliche senkrechte Aufhängungsbewegung zu liefern,
• wobei mindestens ein Rad (2) auf einer Seite der Karosserie in Querrichtung angeordnet ist, während mindestens ein anderes Rad auf der anderen Seite der Karosserie angeordnet ist,
bei dem
• jeder Aufhängungsträger (4) mit der Karosserie über einen Höhenverstellungsmechanismus (3, 7, 11, 12) verbunden ist, der es ermöglicht, die relative Höhe des Aufhängungsträgers (4) bezüglich der Karosserie (1) zu verstellen,
• jeder Höhenverstellungsmechanismus von einer Höhensteuerungseinrichtung (15, 16, 17, 18) betätigt wird,
• das Fahrzeug Einrichtungen zur Zentralsteuerung (19) der Höhensteuerungseinrichtungen enthält,
**dadurch gekennzeichnet, dass**
• die Wirkung der Höhensteuerungseinrichtungen einer gleichen Seite der Karosserie koordiniert wird, um gleichzeitig auf der gleichen Seite der Karosserie die relative Höhe jedes Aufhängungsträgers (4) zu verstellen,
• der Höhenverstellungsmechanismus für jedes Rad eine ein verformbares Parallelogramm (GHIJ) bildende Vorrichtung aufweist, wobei das Parallelogramm auf der einen Seite den Aufhängungsträger (4) aufnimmt und auf der gegenüberliegenden Seite fest mit der Karosserie des Fahrzeugs verbunden ist, wobei die Höhensteuerungseinrichtungen es ermöglichen, das Parallelogramm zu verformen.

2. Fahrzeug nach Anspruch 1, das mindestens drei Räder (2) aufweist, wobei mindestens ein zentrales Rad in einer Symmetrieebene des Fahrzeugs angeordnet ist, bei dem die Wirkung der Steuereinrichtungen der Räder koordiniert ist, um die Längsneigung der Karosserie während der Verstellungen der relativen Höhe jedes Aufhängungsträgers (4) zu halten.

3. Fahrzeug nach Anspruch 1, das mindestens vier Räder (2) aufweist, wobei mindestens zwei Räder auf einer Seite der Karosserie in Querrichtung angeordnet sind, während mindestens zwei andere Räder auf der anderen Seite der Karosserie angeordnet sind.

4. Fahrzeug nach Anspruch 3, bei dem die Höhensteuerungseinrichtungen der gleichen Seite der Karosserie einen einzigen Stellantrieb (18) enthalten.

5. Fahrzeug nach einem der vorhergehenden Ansprüche, bei dem die Parallelogramme sich in einer Ebene im Wesentlichen parallel zur Mittelebene des Fahrzeugs erstrecken.

6. Fahrzeug nach Anspruch 5, das vier Räder, eine Vorderachse und eine Hinterachse aufweist, wobei jedes Parallelogramm jedes Rads einen vorderen Bereich und einen hinteren Bereich hat, wobei die Parallelogramme der Räder der Vorderachse über ihren hinteren Bereich und die Parallelogramme der Räder der Hinterachse über ihren vorderen Bereich an der Karosserie angelenkt sind.

7. Fahrzeug nach den Ansprüchen 3 und 5, bei dem die Parallelogramme der Räder auf der gleichen Seite des Fahrzeugs mechanisch miteinander verbunden und einem gemeinsamen Stellantrieb unterworfen sind.

8. Fahrzeug nach einem der Ansprüche 3, 5 oder 7, bei dem die Höhenverstellungsmechanismen jedem der Aufhängungsträger (4), der sich auf der gleichen Seite des Fahrzeugs befindet, im Wesentlichen gleiche Höhenänderungswerte aufzwingen.

9. Fahrzeug nach einem der vorhergehenden Ansprüche, bei dem die Zentralsteuereinrichtungen Höhenverstellungen auf einer Seite der Karosserie erlauben, die sich von den Höhenverstellungen auf der anderen Seite der Karosserie unterscheiden.

10. Fahrzeug nach einem der vorhergehenden Ansprüche, bei dem die Zentralsteuereinrichtungen gleiche Höhenverstellungen auf den beiden Seiten der Karosserie erlauben.

11. Fahrzeug nach einem der vorhergehenden Ansprüche, das mindestens eine Höhenbremse (20) enthält, die eine Blockierung der Höhensteuerungseinrichtungen erlaubt, wobei die Bremse von den Zentralsteuereinrichtungen (19) gesteuert wird, um die Steuereinrichtungen bei den Höhenverstellungen freizugeben.

12. Fahrzeug nach einem der vorhergehenden Ansprüche, bei dem die Einfederung der Aufhängungsvorrichtung im Wesentlichen in der Ebene des Rads stattfindet.

13. Fahrzeug nach Anspruch 12, bei dem die Aufhängungsvorrichtung (5) einen im Wesentlichen senkrecht ausgerichteten Stab und eine Führungshülse des Stabs in Translationsrichtung aufweist, wobei die Hülse auf den Träger (4) ohne mögliche relative Bewegung in senkrechter Richtung zwischen der Hülse und dem Träger montiert ist, wobei der Radhalter durch gabelförmige Verbindung auf die zwei Enden des Stabs montiert ist.

14. Fahrzeug nach Anspruch 13, bei dem die Hülse auf den Träger (4) mittels eines Drehzapfens montiert ist, der den Einschlag des Rads (2) bezüglich des Trägers (4) erlaubt.
